Europäisches Patentamt

(19) European Patent Office

Office européen des brevets

(11) Veröffentlichungsnummer: **0 035 955**
**A2**

(12) **EUROPÄISCHE PATENTANMELDUNG**

(21) Anmeldenummer: 81710006.8

(22) Anmeldetag: 21.02.81

(51) Int. Cl.³: **B 64 D 11/00**

(30) Priorität: 29.02.80 DE 3007733

(43) Veröffentlichungstag der Anmeldung:
16.09.81 Patentblatt 81/37

(84) Benannte Vertragsstaaten:
AT BE CH DE FR GB IT LI LU NL SE

(71) Anmelder: SCHWEIZERISCHE ALUMINIUM AG

CH-3965 Chippis(CH)

(72) Erfinder: Mittelmann, Gerhard
Schlossstrasse 5
D-7763 Öhningen(DE)

(72) Erfinder: Brodbeck, Klaus-Peter, Dipl.-Ing.
Rheinfelder Strasse 84a
D-7700 Singen(DE)

(74) Vertreter: Hiebsch, Gerhard F., Dipl.-Ing.
Erzbergerstrasse 5A Postfach 464
D-7700 Singen(DE)

(54) **Flugzeug mit Transportbehältern oder Containern.**

(57) Bei einem Flugzeug mit in einem Frachtraum od. dgl. lösbar in einer Einbaustellung festgelegten Transportbehältern oder Containern, deren über einer Bodenplatte des Transportbehälters liegender, von Wänden umgebener Innenraum durch eine gegebenenfalls verschließbare Öffnung wenigstens einer Seitenwand bewegbar ist, soll es möglich werden, die Übernachtungsprobleme für die Passagiere in Abhängigkeit vom wechselnden Bedarf zu lösen, und darüberhinaus den Mangel zu beheben, daß hohe Kosten durch nicht genützten Frachtraum entstehen.

Dies wird durch ein Flugzeug erreicht, in dem zumindest ein Transportbehälter (100) als Schlafkabine/n(16) mit Liegestatt (31) ausgerüstet sowie in Einbaulage begehbar angeordnet ist.

Diese Schlafkabinen (16) sollen insbesondere in sogenannten Kombinationsflugzeugen dem Passagierraum (12) benachbart und von diesem aus begehbar sein. Im Frachtraum (11) des Flugzeuges (1) liegen einander jeweils zwei Transportbehälter (100) gegenüber, welche mit je einer Längswand (21) der Längsseite (6) des Flugzeugrumpfes benachbart sind und mit der jenen Längswand (21) gegenüberstehenden -- und die Türen (27) aufnehmenden -- Innenwand einen begehbaren Gang begrenzen, in dem die Fluggäste (p) beliebig vom Passagierraum (12) zur Schlafkabine wechseln.

Fig.3

# DIPL.-ING. GERHARD F. HIEBSCH 0035955

## PATENTANWALT

PROFESSIONAL REPRESENTATIVE BEFORE THE EUROPEAN PATENT OFFICE

MANDATAIRE AGRÉÉ PRÈS L'OFFICE EUROPÉEN DES BREVETS

D-7700 SINGEN 1

Erzbergerstr. 5a

Telegr./Cables:

Bodenseepatent

Telex 7 93 850

Telefon (07731) 63075
63076

Mein Zeichen

My ref./Ma réf.: AL-1392/EPA

I/ha

Datum/Date

Schweizerische Aluminium AG
==============================

CH-3965 Chippis
================

Flugzeug mit Transportbehältern oder Containern

Die Erfindung betrifft ein Flugzeug mit in einem Frachtraum od. dgl. lösbar in einer Einbaustellung festgelegten Transportbehältern oder Containern, deren über einer Bodenplatte des Transportbehälters liegender, von Wänden umgebener Innenraum durch eine gegebenenfalls verschließbare Öffnung wenigstens einer Seitenwand begehbar ist.

Die Fluggesellschaften aller Welt nehmen in besonderen Transportflugzeugen oder aber in sogenannten Kombinationsflugzeugen für Passagiere und Güter sogenannte Container oder Transportbehälter mit, welche am Boden beladen und bei Eintreffen des Flugzeuges ohne zeitraubende Stauarbeit in den Frachtraum gehoben und dort verankert werden können. Es gibt genormte Transportbehälter, die in bestimmten Flugzeuggrößen auch unterschiedlicher Hersteller Verwendung finden können, was naheliegenderweise die Lagerhaltung der Transportbehälter vereinfacht.

- 2 -

Die bereits genannten Kombinationsflugzeuge für Passagierverkehr und Fracht werden üblicherweise auf sehr weiten Strecken eingesetzt; die Passagiere sind dabei bekanntlich gezwungen, oft nächtelang in den üblichen Flugsesseln zu sitzen; Schlafkabinen insbesondere in Oberdecks von Großraumflugzeugen stehen zumeist nicht zur Verfügung.

Es ist bereits versucht worden, durch Bettgestelle, welche als Ersatz für aus dem Passagierraum entfernte Flugsessel eingebaut werden, dem Schlafbedürfnis der Fluggäste Rechnung zu tragen. Dieses Vorgehen ist kostenintensiv sowie häufig nicht am aktuellen Bedarf orientiert.

Angesichts dieser Gegebenheiten hat sich der Erfinder das Ziel gesetzt, ein Flugzeug der eingangs erwähnten Art in Verbindung mit Transportbehältern zu schaffen, welches es erlaubt, die Übernachtungsprobleme für die Passagiere in Abhängigkeit vom wechselnden Bedarf zu lösen und bei dem darüber hinaus ein weiterer Mangel von Transportflugzeugen behoben wird, nämlich das Entstehen hoher Kosten durch nicht genützten Frachtraum.

Zur Lösung dieser Aufgabe führt, daß zumindest ein Transportbehälter des Flugzeuges als Schlafkabine/n mit Liegestatt ausgerüstet sowie in Einbaulage begehbar angeordnet ist. Dabei hat es sich als besonders günstig erwiesen, diese Schlafkabinen in sogenannten Kombinationsflugzeugen dem Passagierraum benachbart und von diesem aus begehbar anzuordnen.

Auch liegt es im Rahmen der Erfindung, daß im Frachtraum des Flugzeuges einander jeweils zwei Transportbehälter gegenüberliegen, welche mit je einer Längswand der Längsseite des Flugzeugrumpfes benachbart
sind und mit der jener Längswand gegenüberstehenden
-- und die Öffnung/en aufnehmenden -- Innenwand
einen begehbaren Gang begrenzen. In diesem können
die Fluggäste beliebig vom Passagierraum zur Schlafkabine wechseln.

Ein derart ausgerüstetes Flugzeug kann also dank der
austauschbaren Transportbehälter bei Frachtauslastung nur Frachtcontainer aufnehmen und auf langen
Strecken entweder insgesamt oder -- bezogen auf Frachtlücken -- teilweise als eine Art fliegendes Hotel
dienen.

Eine wesentliche Voraussetzung für die wirtschaftliche
Funktionsfähigkeit dieses erfindungsgemäßen Systems
ist, daß der als Schlafkabine ausgebildete Transportbehälter selbst sich bezüglich seiner äußeren Kontur
und der Verankerungselemente nicht von den Lastcontainern unterscheidet, wozu auch eine erfindungsgemäße
Ausgestaltung der Bodenplatte und Dachplatte beiträgt,
die es erlaubt, die üblicherweise am Boden des Frachtraumes vorhandenen Transportrollen zum Verschieben des
Containers zu benutzen und gleichzeitig gegen die
Passagiere abzudecken. Eine der Längswände des Transportbehälters ist seitenversetzt und läßt einen Kragstreifen an Boden- bzw. Dachplatte frei, der die Begehung des Frachtraumes durch die Passagiere zuläßt.

Da die Konturen der Frachtbehälter so ausgelegt sind, daß zwischen den Frachtbehältern möglichst wenig Raum bleibt, ermöglicht die beschriebene Versetzung der Behälterwand das bereits erwähnte Begehen der Kabinen ohne Änderung der Außenkonturen der Behälter.

Um den zwischen zwei einander gegenüberstehenden Transportbehältern so entstehenden Gang gegen den übrigen Frachtraum abzusichern, hat es sich als günstig erwiesen, daß an wenigstens einer Stirnwand oder an der inneren Längswand des Transportbehälters ein der Breite jenes Kragstreifens der Bodenplatte entsprechender Schwenkflügel angelenkt und zumindest in einer zur Stirnwand parallelen oder zu ihr fluchtenden Lage fixierbar ist. Durch diese Maßgabe reicht es aus, die beiden einander gegenüberstehenden, vom Passagierraum am weitesten entfernt liegenden Schwenkflügel in der beschriebenen Stellung zu fixieren, um den Zwischengang gegen den verbleibenden Frachtraum hin abzuschirmen oder abzugrenzen.

Der Transportbehälter für ein erfindungsgemäßes Flugsystem weist die bereits beschriebenen Besonderheiten auf und kann außerdem -- nach einem weiteren Merkmal der Erfindung -- durch eine sich zwischen seinen beiden Längswänden erstreckende Querwand in zwei Schlafkabinen geteilt sein, deren jede wenigstens eine Liegestatt aufnimmt, der bevorzugtermaßen Sitzgurte zugeordnet sind, um den Benutzern der Schlafkabine zumindest bei Start und Landung ausreichende Sitzsicherheit zu bieten.

Aus ökonomischen Gründen hat es sich zudem als günstig erwiesen, die Querwand zugleich als Symmetrieebene für die Schlafkabinen des Transportbehälters zu nehmen, um die Austauschbarkeit zu verbessern.

Bevorzugtermaßen sind die Liegestätten parallel zur Querwand angeordnet, um für die Passagiere eine vernünftige Körperlage zur Flugrichtung zu geben, die in jedem Falle der Sitzlage im Flugzeugsitz vorzuziehen ist.

Die Erfindung trägt also den Bedürfnissen Rechnung, daß nämlich Fluggäste auf längeren Reisen gern von den unbequemen Flugsitzen Abstand nehmen würden, daß sich anderseits feste Schlafkabinen in Flugzeugen wegen der fraglichen Auslastung nicht durchsetzen, daß aber vor allem die Anzahl der Schlafkabinen eines Flugzeuges in Abhängigkeit von der Nachfrage durch die Passagiere einerseits und die Auslastung durch Fracht andererseits bestimmt und das Flugzeug entsprechend ausgerüstet bzw. umgerüstet werden kann.

Für Flugzeuge mit üblicherweise in einem vorgegebenen Raster zeitweilig im Frachtraum in Einbaustellung festgelegten Containern werden diese nach einem weiteren Merkmal der Erfindung mit fensterartigen Wandöffnungen versehen, die in jener Einbaustellung an üblichen Fenstern der Frachtraumwandung angeordnet sind; dies macht jene Schlafkabinen wohnlicher und erlaubt dem Passagier die Beobachtung des Horizontes, was im Hinblick auf die Psyche mancher Fluggäste von besonderer Bedeutung ist.

Die Flugzeuge sind bekanntlich mit Versorgungsleitungen für Strom, Luft, Wasser od. dgl. versehen, so daß es sich als günstig erwiesen hat,
den Transportbehälter mit Zufuhrleitungen für Strom,
Luft, Wasser od. dgl. anzuschaffen, die in seiner
Einbaustellung an die entsprechenden Versorgungsleitungen des Flugzeuges angeschlossen sind. Hierzu dienen erfindungsgemäß vom Transportbehälter
abhebbare oder abschwenkbare Kupplungselemente,
welche an die Versorgungsleitungen des Flugzeuges
schnell angekuppelt werden können. Gerade das  macht
deutlich, daß Flugzeug und Container zu einer Einheit
integriert sind.

Im Rahmen dieser Erfindung liegt zum einen die beschriebene Einheit aus Flugzeug und angekoppelten
Containern sowie zum anderen der Transportbehälter
mit den in den Patentansprüchen genannten Merkmalen.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt in

Fig. 1   die schematisierte Seitenansicht eines Großraumflugzeuges während des Fluges;

Fig. 2   den Grundriß des Hauptdecks des Flugzeuges nach Fig. 1;

Fig. 3   einen vergrößerten Ausschnitt aus Fig. 2 entsprechend dem dort als Bereich III gezeigten Grundrißteil;

Fig. 4   den Querschnitt durch einen Teil des Flugzeugrumpfes, etwa entsprechend Linie IV - IV in Fig. 3;

Fig. 5   eine schematisierte Schrägsicht auf ein Detail der Fig. 3.

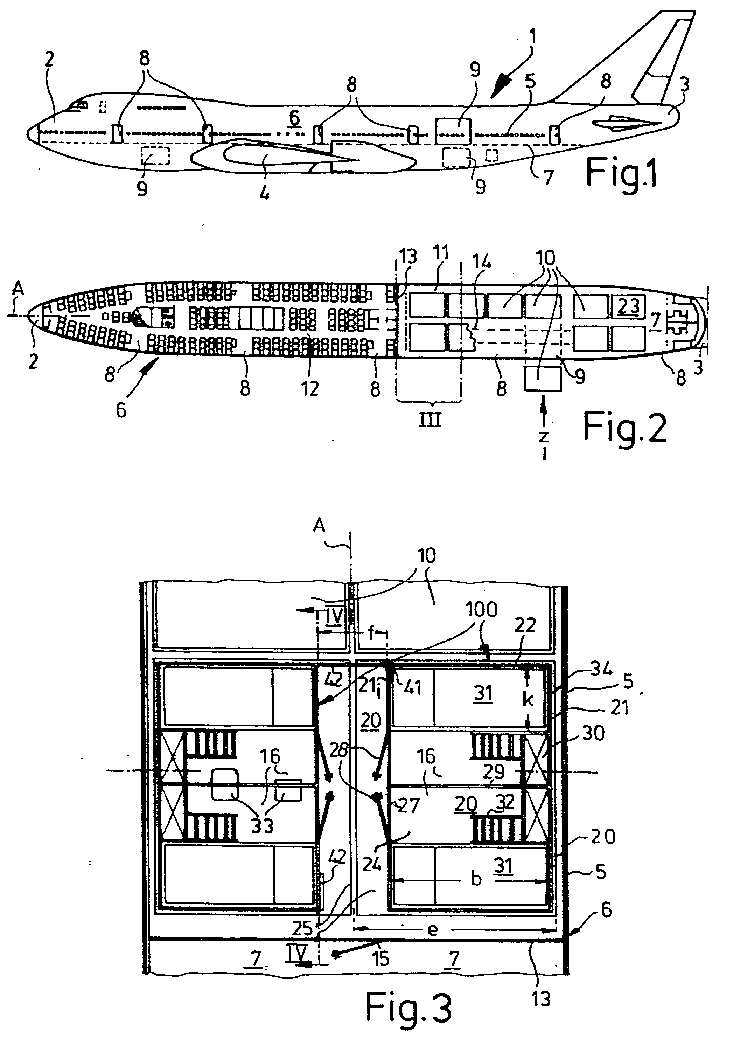

Ein Großraumflugzeug 1 mit einer vom Bug 2 zum Heck 3 oberhalb der Tragflächen 4 verlaufenden Reihe von Fenstern 5 weist an einer Längsseite 6 seines Rumpfes über einer in Fig. 1 den Boden des Hauptdecks andeutenden gestrichelten Linie 7 außer fünf Manntüren 8 noch eine Frachtluke 9 auf; durch diese können Frachtbehälter 10 in Pfeilrichtung z in einen Frachtraum 11 gehoben werden.

In Fig. 1 sind auch unterhalb des Hauptdeckbodens 7 Frachtluken 9 angedeutet, welche in ein -- ebenfalls Fracht aufnehmendes -- Unterdeck führen.

Im Boden 7 des vom vorderen bestuhlten Passagierraum 12 durch eine Querwand 13 getrennten Frachtraums 11 verlaufen parallel zur Flugzeughauptachse A Rollenbahnen 14, auf denen die Transport- oder Frachtbehälter 10 zu ihren Standplätzen gleiten und dort in hier nicht dargestellter Weise lösbar verankert werden.

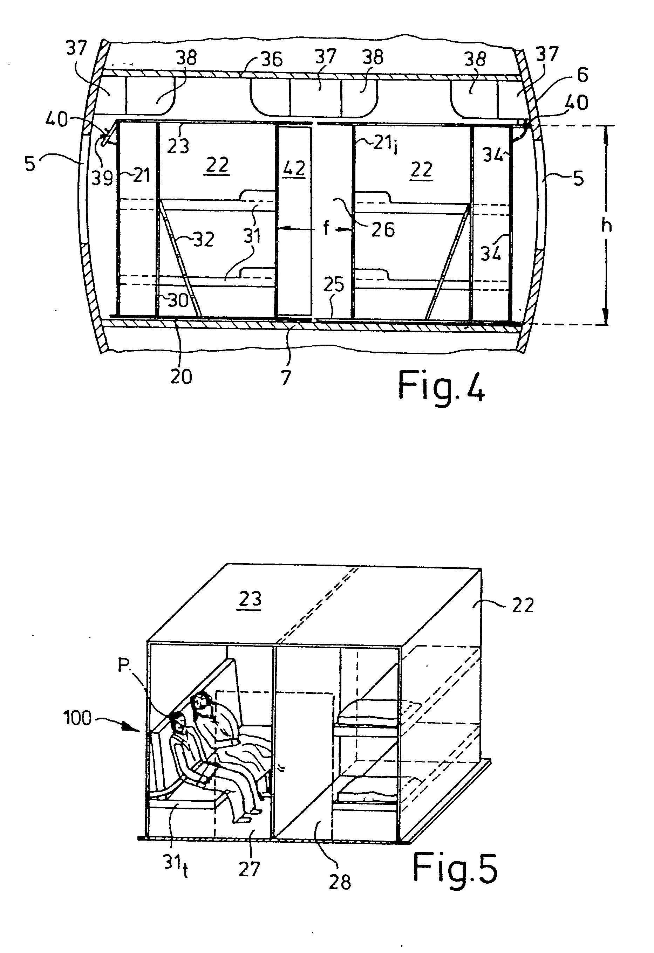

Im gewählten Ausführungsbeispiel sind die beiden jener Querwand 13 benachbarten Frachtbehälter 100 als transportable Schlafräume für Passagiere P (Fig. 5) ausgebildet, so daß letztere bei Bedarf aus dem Passagierraum 12 durch ein Schott 15 in der Querwand 13 in den angrenzenden Frachtraum 11 zu den von jenen Behältern 100 angebotenen Kabinen 16 gelangen.

Jeder Behälter 100 wird von einer Bodenplatte 20, zwei Längswänden 21, zwei Stirnwänden 22 und einem in Fig. 3 vernachlässigten Behälterdach 23 gebildet, dessen Länge der Behälterlänge i von beispielsweise 310 cm entspricht.

Die Breite b des Behälterinnenraumes 24 beträgt im gewählten Beispiel etwa 190 cm, die Breite e der Bodenplatte 20 jedoch 230 cm, wodurch zwischen den beiden Behältern 100 oberhalb der Bodenplatten 20 ein von deren Kragstreifen 25 unterfangener Gang 26 einer Breite f von wenig mehr als 80 cm verbleibt.

Zwischen den beiden Flügeln 28 eines zweiflügeligen Türeinsatzes in einer Öffnung 27 der inneren Längswand 21
des Behälters 100 ist eine den Behälterinnenraum 24 in
zwei Kabinen 16 teilende Zwischenwand 29 angesetzt, welche hier auch die Symmetrieebene für den Grundriß des Behälterinnenraumes 24 darstellt; beidseits der Zwischenwand
29 schließt an sie ein Spind 30 und ein Zweietagenbett 31
an, dessen Oberbett eine Leiter 32 zugeordnet ist. In den
auf der linken Seite der Fig. 3 liegenden beiden Schlafkabinen 16 sind zudem Klappsitze 33 zu erkennen.

Im Bereich der Bettbreite k sind in die äußere Längswand
21 Fenster 34 eingefügt, die in verankerter Lage des Behälters 100 einem Fenster 5 der Rumpflängsseite 6 gegenüberstehen.

Fig. 4 läßt die Kabinenhöhe h von etwa 230 cm erkennen; das
Behälterdach 23 liegt geringfügig unterhalb von an der
Hauptdecke 36 des Frachtraumes 11 hängenden Versorgungskanälen 37, an welche seitlich Handgepäckklappen 38 angebaut sind. In den Versorgungskanälen 37 verlaufen übersichtlichkeitshalber in der Zeichnung vernachlässigte Versorgungsleitungen für Bordstrom, -luft-, -wasser etc.

An das Behälterdach 23 ist entlang der äußeren Längswand
21 wenigstens eine Flügelklappe 40 angelenkt, in deren
als Faltenbalg ausgebildetem Körper Anschlüsse 39 für
nicht näher dargestellte Versorgungsleitungen des Behälters
100 untergebracht sind. Nach dem Verankern des Behälters
100 können diese Flügelklappen 40 an die Versorgungskanäle
37 herangeführt werden (rechte Figurenhälte der Fig. 4),
so daß die -- nicht gezeigten -- Luft-, Wasser- und Stromkupplungen oder -anschlüsse 39 an entsprechende Gegenkupplungsteile der Leitungen in den Versorgungskanälen 37 herangeführt und angekoppelt werden können. Hierzu bedient man sich in der Zeichnung nicht wiedergegebener elektronischer, pneumatischer oder hydraulischer Hilfsmittel -- beispielsweise Kraftspeicher -- oder die Flügelklappen 40 werden durch die Fenster 34 von Hand angekuppelt.

Um den verbleibenden Frachtraum 11 vom Gang 26 zu trennen, sind an den beiden Kanten 41 der inneren Längswand $21_i$ Schwenkflügel 42 angelenkt, von denen der dem Frachtraum 11 nächstliegende Schwenkflügel 42 in der in Fig. 3 gezeigten Lage fixiert wird, in welcher er zusammen mit dem entsprechenden Schwenkflügel 42 des gegenüberliegenden Behälters 100 gegen den Frachtraum 11 hin eine Sperrwand bildet.

Fig. 5 zeigt Passagiere P, die -- mittels Gurten 45 angeschnallt -- bei Start oder Landung des Großraumflugzeuges 1 das Unterbett $31_t$ des Zweietagenbettes 31 als Sitzbank nutzen.

P A T E N T A N S P R Ü C H E
=================================

1. Flugzeug mit in einem Frachtraum od. dgl. lösbar in einer Einbaustellung festgelegten Transportbehältern oder Containern, deren über einer Bodenplatte des Transportbehälters liegender, von Wänden umgebener Innenraum durch eine gegebenenfalls verschließbare Öffnung wenigstens einer Seitenwand begehbar ist, dadurch gekennzeichnet, daß zumindest ein Transportbehälter (100) des Flugzeugs (1) als Schlafkabine/n (16) mit Liegestatt (31) ausgerüstet sowie in Einbaulage bewegbar angeordnet ist.

2. Flugzeug nach Anspruch 1 mit einem dem Frachtraum zugeordneten Passagier- oder Fahrgastraum, dadurch gekennzeichnet, daß die als Schlafkabine/n (16) ausgebildeten Transportbehälter (100) dem Passagierraum (12) benachbart und von diesem aus begehbar sind.

3. Flugzeug nach Anspruch 1 oder 2 mit in einem vorgegebenen Raster zeitweilig in dem Versorgungsleitungen für Strom, Luft, Wasser od. dgl. aufweisenden Frachtraum in einer Ruhelage festgelegten Transportbehältern, dadurch gekennzeichnet, daß der als Schlafkabine/n (16) ausgebildete Transportbehälter (100) Zufuhrleitungen für Strom, Licht, Wasser od. dgl. aufweist, die in seiner Einbaustellung an die entsprechenden Versorgungsleitungen des Flugzeugs (1) angeschlossen, gegebenenfalls durch vom Transportbehälter abschwenkbare oder abhebbare
Kupplungselemente (39) an die Versorgungsleitungen des Flugzeugs (1) angekuppelt, sind.


4. Flugzeug nach einem der Ansprüche 1 bis 3, dadurch
gekennzeichnet, daß der Transportbehälter (100)
fensterartige Wandöffnungen (34) aufweist, die in
seiner Einbaustellung an Fenstern (5) der Frachtraumwandung (6) angeordnet sind.


5. Flugzeug nach einem der Ansprüche 1 bis 4, dadurch
gekennzeichnet, daß im Frachtraum (11) einander
zwei Transportbehälter (100) gegenüberstehen, die
jeweils mit einer Längswand (21) der Längsseite (6)
des Flugzeugs (1) benachbart sind und mit der jener
Längswand gegenüberliegenden und die Öffnung/en (27)
aufnehmenden inneren Längswand ($21_i$) einen begehbaren Gang (26) begrenzen.


6. Flugzeug nach wenigstens einem der Ansprüche 1 bis
5, dadurch gekennzeichnet, daß auf der der vorgesehenen Rastergröße entsprechenden Bodenplatte
(20) des Transportbehälters (100) die gegenüber
deren Längskante seitlich versetzte innere Längswand
($21_i$) einen freien Kragstreifen (25) bestimmt,
welcher oberhalb des Frachtraumbodens (7) eine Trittfläche für den begehbaren Gang (26) darstellt und
dem gegebenenfalls ein Kragstreifen am Dach (23)
des Transportbehälters entspricht.


7. Flugzeug mit Transportbehälter nach wenigstens
einem der Ansprüche 1 bis 6, dadurch gekennzeichnet,
daß an wenigstens einer Stirnwand (22) oder der
inneren Längswand ($21_i$) des Transportbehälters (100)
eine der Breite des Kragstreifens (25) der Bodenplatte (20) entsprechender Schwenkflügel (42) angelenkt und zumindest in einer zur Stirnwand
(22) parallelen oder fluchtenden Lage fixierbar
vorgesehen ist.

8. Flugzeug mit Transportbehälter nach wenigstens
einem der Ansprüche 1 bis 7, dadurch gekennzeichnet, daß der Transportbehälter (100) durch
eine sich zwischen seinen beiden Längswänden
(21, 21$_i$) erstreckende Querwand (29) in zwei Schlafkabinen (16) für jeweils wenigstens eine Liegestatt (31) geteilt ist, wobei gegebenenfalls die
Querwand (29) Symmetrieebene für die Schlafkabinen
des Transportbehälters ist.

9. Flugzeug mit Transportbehälter nach Anspruch 1
oder 8, dadurch gekennzeichnet, daß die Liegestatt (31) parallel zur Querwand (29) des Transportbehälters (100) verläuft und mit Sitzgurten
(45) versehen ist.

10. Flugzeug mit Transportbehälter nach Anspruch 3,
dadurch gekennzeichnet, daß am Transportbehälter
(100) nach außen hin abschwenkbare Verbindungseinrichtungen (40) mit den Kupplungselementen
(39) für Zufuhrleitungen von Frischluft od. dgl.
vorgesehen und/oder die Kupplungselemente bzw.
die Verbindungseinrichtungen (40) mit Versorgungsleitungen des Beleuchtungs- und/oder Sanitärinstalationen aufweisenden Transportbehälters (100)
verbunden sind.

0035955

Fig.1

Fig.2

Fig.3

Fig. 4

Fig. 5